# FASCICULE DE BREVET EUROPEEN

(11) **EP 0 329 506 B1**
(45) Date de publication et mention de la délivrance du brevet: **31.03.1993**
(21) Numéro de dépôt: 89400254.2
(22) Date de dépôt: 30.01.1989
(51) Int. Cl.: H01M 2/36, B65B 39/00

(54) **Procédé et appareil pour le remplissage de bacs à l'aide d'une composition gélifiée et leur application aux accumulateurs électriques**
Verfahren und Apparat zum Führen von Behältern mit einer gelartigen Zusammensetzung und ihre Verwendung für elektrische Akkumulatoren
Process and apparatus for filling containers with a gelified composition, and teir use in electric batteries

(30) Priorité: 09.02.1988 FR 8801528
(43) Date de publication de la demande: 23.08.1989
(73) Titulaire: OLDHAM FRANCE S.A., 62033 Arras (FR)
(72) Inventeur: Delmotte, Christian, F-62033 - Arras (FR); Royer, Patrick, F-62033 - Arras (FR); Caron, Maryse, F-62033 - Arras (FR)
(74) Mandataire: Mestre, Jean (FR)

(56) Documents cités:
- DE-C- 88 241
- FR-A- 851 265
- FR-A- 2 102 318
- GB-A- 785 848
- US-A- 1 640 945
- US-A- 2 508 492
- US-A- 2 920 579
- US-A- 3 305 396
- US-A- 3 643 688
- US-A- 3 776 779

## Description

La présente invention concerne notamment les accumulateurs électriques étanches et, plus particulièrement, les accumulateurs au plomb à l'acide et vise tout spécialement le remplissage de ces derniers à l'aide d'un électrolyte gélifié.

Les accumulateurs électriques étanches, notamment au plomb, avec électrolyte figé sont connus. Ce type d'accumulateur est, par exemple, décrit dans le brevet français 1 280 180.

Comme exposé, on utilise alors une composition d'électrolyte qui est immobilisée sous forme d'un gel et est constituée d'un mélange d'acide sulfurique et d'acide silicique, notamment.

Comme il est classique, les accumulateurs électriques sont constitués de bacs étanches dans lesquels sont disposées des plaques actives associées à des séparateurs poreux intercalés entre-elles.

Lorsqu'on utilise des accumulateurs de moyennes et grandes dimensions de ce type, une difficulté notable apparaît pour faire en sorte que l'électrolyte emplisse bien tous les interstices sans ménager de bulles ou de manques. L'existence de défauts de remplissage est particulièrement nuisible à la longévité et aux performances de ce type d'accumulateur.

Pour obtenir l'étanchéité maximale on a intérêt à utiliser un électrolyte de très grande viscosité mais alors plus la viscosité est grande plus le remplissage est délicat.

Pour faire face à ce type de difficultés où il faut concilier des exigences antagonistes, différentes solutions ont déjà été proposées.

Par exemple, le document allemand DE 1 671 693 propose d'incorporer à l'électrolyte, à base d'acide sulfurique et d'acide phosphorique, un gel de silice qui est ajouté progressivement tout en agitant en permanence de manière à entretenir une certaine fluidité par malaxage. Grâce à cette technique on parvient à emplir tant bien que mal des accumulateurs ou batteries étanches, dont les électrodes sont sèches et chargées, avec un électrolyte partiellement figé dont la viscosité est notable et de l'ordre de 1 500 cP.

Une autre technique a été proposée par le document français FR 2 493 608. Selon cette technique, on utilise un électrolyte de faible concentration que l'on verse dans les bacs où se trouvent initialement placées les plaques préalablement déchargées. On met alors en oeuvre un processus extrêmement complexe au cours duquel différentes phases de remplissage, de vidage et de charge sont pratiquées.

Selon une autre technique exposée dans le document allemand DE 3 539 834, on utilise un électrolyte auquel on ajoute un gélifiant à deux composants qui réagissent physiquement et/ou chimiquement l'un sur l'autre à l'intérieur des bacs de manière que la viscosité croisse progressivement après emplissage pour aboutir ensuite à une prise en un gel très consistant de l'électrolyte.

Toutes ces techniques si elle permettent de remplir des accumulateurs ou batteries électriques étanches avec un électrolyte qui est gélifié, sont délicates à mettre en oeuvre et ne donnent pas entière satisfaction car elles sont longues, compliquées ou font appel à des constituants onéreux.

Le but de l'invention est de remédier à ces inconvénients grâce à une technique relativement simple et facile à mettre en oeuvre.

Le but de l'invention concerne notamment la fabrication d'accumulateurs au plomb, par exemple à plaques positives tubulaires ou à plaques positives planes dont l'électrolyte de remplissage et de travail est à base d'une composition faite d'un mélange d'acide sulfurique et d'acide silicique formateur de gel permettant d'obtenir des accumulateurs étanches dits à recombinaison de gaz ayant de bonnes aptitudes au travail en cycles pour l'utilisation en batterie de traction et de bonnes aptitudes au travail sous tension de "floating" pour l'utilisation en batterie stationnaires. Par tension de "floating" on entend dans la technique la tension constante, de valeur prédéterminée en fonction du type et de la nature de la batterie à laquelle elle est appliquée, maintenue aux bornes d'une batterie pour y faire passer un courant qui compense la décharge spontanée des matières actives et, ainsi, permet de conserver en permanence la batterie dans un état de charge maximale.

L'invention a pour objets un procédé et un appareil et leur application pour le remplissage de bacs étanches d'accumulateurs garnis d'au moins une partie de leurs constituants internes, notamment de leurs plaques définitivement formées, directement à partir d'une composition d'électrolyte gélifié de fonctionnement de viscosité relativement grande.

Le procédé de remplissage selon l'invention est caractérisé en ce qu'on introduit dans un bac la composition gélifiée à l'aide d'un fluide propulseur injecté au sein de cette dernière et y créant une turbulence de manière qu'à l'origine la viscosité de la composition soit de l'ordre de 300000 cP environ et de manière qu'à l'admission dans le bac celle-ci soit voisine de celle de l'eau et on règle le débit d'entrée de la composition de manière à ce qu'il soit de l'ordre de 2 m³/h et on utilise un fluide propulseur tel de l'air dont la pression est comprise entre 0,1 et 7 hPa.

L'appareil pour le remplissage, notamment selon le procédé que l'on vient d'indiquer, est remarquable en ce qu'il comprend un corps creux longiligne pour véhiculer la composition gélifiée dans lequel est ménagé un compartiment où débouchent un orifice d'entrée et un orifice de sortie entre lesquels se trouve un étranglement intermédiaire au niveau d'une chambre à paroi conique, et une buse effilée pour injecter un fluide qui est logée au moins partiellement dans le corps creux et qui est percée d'un conduit axial à l'une des extrémités duquel se trouve une embouchure extérieure au corps creux et à l'autre des extrémités duquel se trouve un ajutage débouchant pratiquement au niveau de l'étranglement et qui présente des flancs coniques à l'aplomb de la chambre de manière à délimiter un passage annulaire entre chambre et flancs.

Grâce à l'invention, il est possible d'assurer le remplissage de grands ou petits accumulateurs dont la matière active des plaques a été préalablement formée soit dans les bacs définitifs soit dans des bacs auxiliaires. En particulier, grâce à l'invention on peut faire en sorte que les matières actives des plaques soient formées dans les bacs définitifs à l'aide d'un électrolyte de formation que l'on retire par déversement avant leur remplissage avec la composition définitive d'électrolyte gélifié à base d'acide sulfurique et d'acide silicique.

Grâce à l'invention il est aussi possible d'utiliser une composition gélifiée finale d'électrolyte comprenant de l'acide phosphorique afin d'améliorer l'aptitude au travail en cycles.

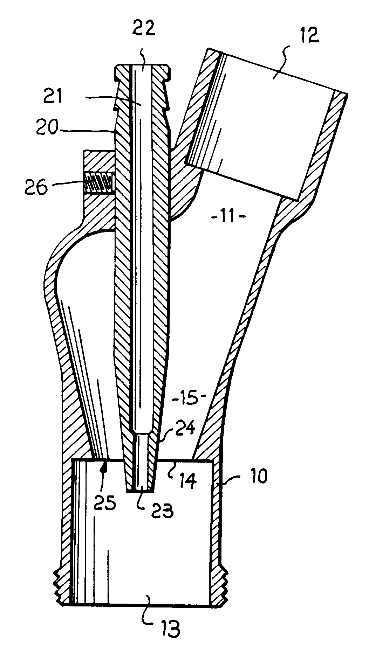

D'autres caractéristiques de l'invention ressortiront de la lecture de la description et des revendications qui suivent et de l'examen, du dessin annexé, donné seulement à titre d'exemple, où la figure unique est une coupe axiale d'un mode de réalisation d'un appareil suivant l'invention notamment pour la mise en oeuvre du procédé indiqué.

Les accumulateurs étanches notamment ceux dans lesquels on utilise pour électrolyte une composition à base d'acide sulfurique gélifiée par de l'acide silicique, sont bien connus dans la techniques. C'est pourquoi dans ce qui suit on ne décrira que ce qui se rapporte à l'invention. Pour le reste le spécialiste de la technique considérée puisera dans les solutions classiques courantes à sa disposition pour faire face aux problèmes particuliers auxquels il est confronté.

Comme il est connu, les propriétés physiques et les charactéristiques de surface de la silice de pyrogénation lui confèrent l'aptitude d'épaissir les liquides auxquels elle est ajoutée et d'en régler la thixotropie.

Quand de l'acide silicique est dispersé dans une composition liquide, les agrégats en forme de chaînes s'unissent entre eux en donnant une structure en réseau. L'aptitude de la composition liquide à couler se trouve ainsi réduite, d'où une augmentation de la viscosité ou épaississement, voire figeage ou prise en masse au moins partielle.

Chacune des particules de la chaîne possède des groupes hydroxyles fixés sur les atomes de silice en surface, l'atome d'hydrogène se trouvant sur une particule a de l'affinité pour l'atome d'oxygène d'une particule voisine. Quand ces particules se rapprochent, il se forme une liaison entre ces deux atomes, phénomène connu sous le nom de liaison hydrogène.

Si la quantité d'acide silicique dispersé dans une composition liquide est très petite, il ne se forme qu'un nombre limité de liaisons hydrogène car les chaînes sont généralement trop éloignées pour s'unir ensemble en un réseau étroitement serré ; la viscosité demeure peu importante.

Par contre, si on utilise une quantité d'acide silicique dispersé plus grande et si la concentration acide du mélange est aussi plus importante, il se forme un grand nombre de liaisons hydrogène, d'où une augmentation notable de la viscosité, ou épaissement, appelée thixotropie.

On a constaté que les facteurs agissant sur la thixotropie sont principalement la nature du liquide, la concentration en acide silicique, la valeur du pH, la nature des additifs, le degré de dispersion, le type d'acide silicique utilisé, compte-tenu des concentrations relatives en acide silicique et en acide sulfurique utilisées.

Quant on fabrique des accumulateurs au plomb dont l'électrolyte est une composition constituée d'un mélange d'acide sulfurique et d'acide silicique agissant comme formateur de gel, on obtient une composition de viscosité élevée qui rend presque impossible l'introduction de celle-ci dans l'accumulateur et tout particulièrement lorsque l'accumulateur est de grande dimension.

Une des techniques utilisées, comme rappelé, consiste à faire en sorte que la composition de remplissage de l'accumulateur présente une petite thixotropie, c'est-à-dire une fluidité importante, en diminuant de façon notable la concentration acide de la composition de remplissage par décharge préalable des plaques ou par ajouts d'additifs servant de retardateurs de thixotropie, c'est-à-dire de retardateurs de gélification.

Ce qui caractérise la technique de remplissage suivant l'invention est que la composition d'électrolyte de remplissage contient la quantité d'acide silicique nécessaire à la formation du gel et la concentration en acide sulfurique nécessaire à la décharge de l'accumulateur et qui correspond à la concentration acide d'un accumulateur pleinement chargé. Cette composition gélifiée a, par exemple, une concentration acide qui peut varier de 22% à 40% environ avec l'acide silicique commercialisé sous la référence "Aérosil 200" par la société allemande Degussa AG dans des proportions de l'ordre de 3 à 10% du poids de l'électrolyte de remplissage. On peut aussi utiliser celui commercialisé sous la référence "Cab-O-Sil" par la société française Cabot-France. On utilise une composition ainsi obtenue qui est de grande viscosité, de l'ordre de 300000 cP environ. Afin que cette composition puisse emplir tous les interstices libres disponibles entre les constituants internes, par exemple les plaques et les séparateurs de l'accumulateur, on augmente physiquement son aptitude à s'écouler c'est-à-dire qu'on diminue momentanément sa viscosité apparente, seulement lors de la phase de remplissage proprement dite.

Selon la technique de l'invention on modifie temporairement la structure du réseau de la composition d'électrolyte en créant une turbulence à l'aide d'un fluide propulseur injecté sous pression au sein de la composition d'électrolyte à grande viscosité, par exemple à l'aide d'un éjecteur dont la configuration rappelle celle d'un venturi.

Comme on le voit sur la figure unique du dessin, représenté pratiquement à l'échelle, l'appareil notamment pour la mise en ouvre du procédé selon l'invention, comprend un corps 10 creux, relativement longiligne pour véhiculer la composition d'électrolyte qui est acheminée par exemple à l'aide d'une pompe doseuse classique, non représentée, qui permet de régler le débit et/ou la pression d'alimentation en composition d'électrolyte.

Ce corps 10 présente un compartiment 11 qui communique avec des orifices d'entrée 12 et de sortie 13. Comme on l'observe, un étranglement 14 intermédiaire est ménagé. Cet étranglement est précédé par une chambre 15 à paroi conique, de préférence de révolution.

Dans ce corps 10 est placée une buse 20 effilée pour injecter un fluide propulseur. Ce fluide propulseur est, par exemple, de l'air comprimé. On utilise par exemple de l'air comprimé distribué par le réseau de distribution, que l'on trouve couramment dans les bâtiments industriels. Au besoin, on intercale un détendeur entre le compresseur et la buse. On utilise de préférence de l'air comprimé dont la pression est comprise entre 0,1 et 7 hPa.

Cette buse 20 est logée au moins partiellement dans le corps creux comme illustré. Cette buse 20 est percée d'un conduit 21 qui se termine à l'une de ses extrémités par une embouchure extérieure 22 et à l'autre de ses extrémités par un ajutage 23 débouchant pratiquement au niveau de l'étranglement 14. Comme on peut le voir, cette buse présente des flancs coniques au niveau de la chambre 15. La chambre et la buse qui sont approximativement coaxiales délimitent ainsi un passage annulaire 25.

Le corps est aussi muni d'un trou taraudé 26 dans lequel on peut engager une vis, non dessinée, afin de régler la position longitudinale de la buse 20 dans la chambre 15.

L'embouchure extérieure 22 de la buse 20 et les orifices 12 et 13 du corps creux 10 sont munis de raccords appropriés convenablement adaptés pour les brancher aux canalisations, tuyauteries et bacs d'accumulateur. Ceci est classique, c'est pourquoi on ne s'y étendra pas davantage.

Les matériaux de cet appareil sont choisis pour résister, et être compatibles, avec la composition d'électrolyte et le fluide propulseur.

Pour le mode de réalisation illustré, l'ajutage 23 dépasse de l'étranglement 14 d'environ 8 mm et présente un diamètre intérieur de 4 mm environ. Le passage annulaire 25 a un diamètre extérieur d'environ 24 mm et un diamètre intérieur d'environ 7 mm. Les angles des cones de la chambre et de la buse sont, de préférence, de l'ordre de ceux utilisés sur le dessin.

L'appareil selon l'invention est utilisé de manière que son orifice d'entrée 12 reçoive la composition d'électrolyte qui en ressort par son orifice de sortie 13 relié au bac d'un accumulateur étanche. Le fluide propulseur est injecté par l'embouchure extérieure 22 et sort par l'ajutage 23 au sein de l'électrolyte auquel il se mêle pour en abaisser la viscosité.

Le fluide propulseur, ici de l'air comprimé, utilisé s'échappe ensuite du bac étanche par les autres ouvertures de celui-ci laissées ouvertes.

En utilisant, si nécessaire, plusieurs appareils selon l'invention montés en cascade, les uns à la suite des autres on peut partir d'une composition d'électrolyte faite d'un mélange d'acide sulfurique et d'acide silicique dont la concentration en acide sulfurique correspond au fonctionnement d'un accumulateur dont les plaques sont initialement formées et chargées . A l'entrée dans l'appareil la composition d'électrolyte a une viscosité très importante, de l'ordre de 300 000 cP environ, alors qu'à son arrivée dans le bac la viscosité de l'électrolyte est voisine de celle de l'eau. On comprend donc qu'avec une telle viscosité ainsi momentanément abaissée, il n'y a plus aucune difficulté de remplissage du bac par l'électrolyte y compris dans les interstices les plus ténus, de quelques dixièmes de millimètres, qui se trouvent entre les matériaux des plaques et les séparateurs poreux qui leur font face . La composition d'électrolyte qui a été ainsi temporairement notablement fluidifiée se gélifie de nouveau pour reprendre sa viscosité initiale qui n'est pratiquement pas modifiée.

On voit donc toute l'importance de l'invention puisqu'elle permet de s'affranchir de pratiquement toutes les difficultés inhérentes aux techniques antérieures connues dont certaines ont été briévement évoquées.

Comme on l'observe, grâce à l'invention il est possible d'une part de fabriquer des accumulateurs au plomb, notamment à plaques positives tubulaires ou à plaques positives planes, de petites ou de grandes dimensions dont les matières actives de ces plaques ont été soit préalablement formées électrochimiquement dans des bacs séparés qui ne sont pas les bacs d'utilisations de l'accumulateur, soit formées dans les bacs définitifs d'utilisation de l'accumulateur, et d'autre part de remplir des bacs contenant notamment les plaques ainsi totalement chargées avec une composition d'électrolyte contenant de l'acide sulfurique de concentration importante, correspondant à la concentration de l'accumulateur pleinement chargée, et de l'acide silicique avec la concentration nécessaire à la formation d'un gel de viscosité très grande permettant l'immobilisation de l'acide sulfurique tout en assurant que les propriétés du gel ainsi obtenu autorisent le transfert de l'oxygène à la plaque négative selon les prescriptions requises pour les accumulateurs à recombinaison de gaz.

## Revendications

1. Procédé de remplissage d'un bac étanche par exemple d'accumulateur garni d'au moins une partie de ses constituant internes notamment ses plaques, avec une composition gélifiée de viscosité plus grande que celle de l'eau caractérisé en ce qu'on introduit dans le bac la composition à l'aide d'un fluide propulseur injecté au sein de cette dernière et y créant une turbulence et on règle les débits et les pression de la composition et du fluide propulseur de manière qu'à l'entrée du bac la viscosité de la composition soit notablement réduite.

2. Procédé selon la revendication 1, caractérisé en ce que la composition a, à l'origine, une viscosité de l'ordre de 300000 cP et une viscosité voisine de celle de l'eau à son introduction dans le bac.

3. Procédé selon la revendication 1 ou 2, caractérisé en ce que le fluide propulseur est un gaz.

4. Procédé selon la revendication 3, caractérisé en ce que le fluide propulseur est de l'air.

5. Procédé selon l'une quelconque des revendication 1 à 4, caractérisé en ce que la pression du fluide propulseur est comprise entre 0,1 et 7 hPa environ.

6. Appareil pour le remplissage d'un bac étanche par exemple d'accumulateur garni d'au moins une partie de ses constituants internes notamment ses plaques de préférence préformées avec une composition gélifiée d'électrolyte de viscosité initialement plus grande que celle de l'eau, notamment pour la mise en oeuvre du procédé selon l'une quelconque des revendications prédédentes, caractérisé en ce qu'il comprend un corps creux (10) longiligne pour véhiculer la composition d'électrolyte à l'intérieur duquel est ménagé un compartiment (11) où débouchent un orifice d'entrée (12) et un orifice de sortie (13) entre lesquels se trouve un étranglement (14) intermédiaire au niveau d'une chambre (15) à paroi conique, et une buse (20) effilée pour injecter un fluide qui est logée au moins partiellement dans le corps creux (10) et qui est percée d'un conduit axial à l'une des extrémités duquel se trouve une embouchure (22) extérieure au corps creux (10) et à l'autre des extrémités duquel se trouve un ajutage (23) débouchant pratiquement au niveau de l'étranglement (14) et qui présente des flancs (24) coniques à l'aplomb de la chambre (15) de manière à délimiter un passage annulaire (25) entre chambre (15) et flancs (24).

7. Appareil selon la revendication 6, caractérisé en ce que le corps est percé d'un trou taraudé (25) pour le réglage de la buse (20) dans le corps (10).

8. Appareil selon la revendication 6 ou 7, caractérisé en ce que le corps (10) et la buse (20) sont munis de raccords.

9. Application du procédé et/ou de l'appareil selon l'une des revendications précédentes au remplissage d'accumulateurs au plomb préalablement chargé avec une composition d'électrolyte à base d'acide sulfurique et d'acide silicique.

## Patentansprüche

1. Verfahren zum Füllen eines dichten Behälters, zum Beispiel eines wenigstens mit einem Teil seiner inneren Bestandteile, insbesondere seiner Platten, versehenen Akkumulators mit einer gelierten Zusammensetzung deren Viskosität größer ist als diejenige von Wasser, dadurch gekennzeichnet, daß die Zusammensetzung mit Hilfe eines in diese injizierten und dort eine Turbulenz erzeugenden treibenden Fluids in den Behälter eingebracht wird, und daß die Dosen und die Drücke der Zusammensetzung und des treibenden Fluids derart geregelt werden, daß die Viskosität der Zusammensetzung am Einlaß des Behälters erheblich reduziert ist.

2. Verfahren nach Anspruch 1, dadurch gekennzeichnet, daß die Zusammensetzung ursprünglich eine Viskosität in der Größenordnung von 300000 cP und bei ihrer Einleitung in den Behälter eine Viskosität ähnlich derjenigen von Wasser aufweist.

3. Verfahren nach Anspruch 1 oder 2, dadurch gekennzeichnet, daß das treibende Fluid ein Gas ist.

4. Verfahren nach Anspruch 3, dadurch gekennzeichnet, daß das treibende Fluid Luft ist.

5. Verfahren nach einem der Ansprüche 1 bis 4, dadurch gekennzeichnet, daß der Druck des treibenden Fluids zwischen ungefähr 0,1 und 7 hPa liegt.

6. Vorrichtung zum Füllen eines dichten Behälters, zum Beispiel eines wenigstens mit einem Teil seiner inneren Bestandteile, insbesondere seiner Platten, versehenen Akkumulators mit einer gelierten Elektrolytzusammensetzung deren anfängliche Viskosität größer ist als diejenige von Wasser, insbesondere zum Durchführen des Verfahrens nach einem der vorhergehenden Ansprüche, dadurch gekennzeichnet, daß sie einen länglichen Hohlkörper (10) zum Leiten der Elektrolytzusammensetzung aufweist, in dessen Innerem ein Raum (11) ausgebildet ist, in welchen eine Einlaßöffnung (12) und eine Auslaßöffnung (13) münden, zwischen denen sich eine mittlere Querschnittsverminderung (14) in Höhe einer Kammer (15) mit konischen Wänden befindet, und eine konisch zulaufende Düse (20) zum Injizieren eines Fluids aufweist, die wenigstens teilweise in dem Hohlkörper (10) angeordnet und von einem axialen Kanal durchsetzt ist, an dessen einem Ende eine außerhalb des Hohlkörpers (10) befindliche Öffnung (22) und an dessen anderem Ende ein Ansatz (23) vorgesehen ist, der praktisch in Höhe der Querschnittsverminderung (14) mündet und zur Kammer (15) senkrechte konische Flanken (24) aufweist, derart, daß zwischen der Kammer (15) und den Flanken (24) ein ringförmiger Durchlaß (25) gebildet ist.

7. Vorrichtung nach Anspruch 6, dadurch gekennzeichnet, daß der Körper von einem Gewindeloch (26) zum Einstellen der Düse (20) in dem Körper (10) durchsetzt ist.

8. Vorrichtung nach Anspruch 6 oder 7, dadurch gekennzeichnet, daß der Körper (10) und die Düse (20) mit Verbindungselementen versehen sind.

9. Anwendung des Verfahrens und/oder der Vorrichtung nach einem der vorhergehenden Ansprüche zum Füllen von zuvor geladenen Bleiakkumulatoren mit einer Elektrolytzusammensetzung auf der Basis von Schwefelsäure und Kieselsäure.

## Claims

1. A method of filling a sealed container, for example an accumulator provided with at least one part of its internal constituents, particularly its plates, having a jellified composition of a greater viscosity than that of water, characterised in that the composition is introduced into the container by means of a propellant fluid injected into the composition, creating a turbulence therein and in that the rates of flow and the pressures of the composition and of the propellant fluid are so regulated that at the entry into the container the viscosity of the composition is markedly reduced.

2. A method according to Claim 1, characterised in that originally the composition has a viscosity of around 300,000 cP and a viscosity close to that of water upon its introduction into the container.

3. A method according to Claim 1 or 2, characterised in that the propellant fluid is a gas.

4. A method according to Claim 3, characterised in that the propellant fluid is air.

5. A method according to any one of Claims 1 to 4, characterised in that the pressure of the propellant fluid is comprised between 0.1 and 7 hPa approx.

6. An apparatus for filling a sealed container, for example an accumulator provided with at least a part of its internal constituents, particularly its plates which are preferably preformed with a jellified composition of electrolyte of a viscosity which is initially greater than that of water, particularly for carrying out the method according to any one of the preceding Claims, characterised in that it comprises a hollow elongate body (10) for conveying the electrolyte composition in the interior of which there is provided a compartment (11) into which discharge an inlet orifice (12) and an outlet orifice (13) between which there is an intermediate constriction (14) at the level of a chamber (15) having a conical wall, and a tapered nozzle (20) for injecting a fluid which is disposed at least partially in the hollow body (10) which is provided with an axial duct at one of the ends of which there is a terminal connector (22) outside the hollow body (10) while at the other end thereof there is provided a jet (23) which opens out substantially in the region of the constriction (14) and which has conical sides (24) in alignment with the chamber (15) so as to define an annular passage (25) between the chamber (15) and the sides (24).

7. An apparatus according to Claim 6, characterised in that the body is provided with a tapped hole (25) for adjusting the nozzle (20) in the body (10).

8. An apparatus according to Claim 6 or 7, characterised in that the body (10) and the nozzle (20) are provided with connectors.

9. Application of the method and/or of the apparatus according to any one of the preceding Claims to the filling of accumulators inlined and previously charged with a composition of sulphuric acid and silicic acid based electrolytic composition.
